# EUROPEAN PATENT APPLICATION

(11) **EP 4 375 341 A1**
(43) Date of publication of application: **29.05.2024**
(21) Application number: 23211685.5
(22) Date of filing: 23.11.2023
(51) Int. Cl.: C09D 11/322, C09D 11/326

(54) **NEW INK COMPOSITIONS FOR INK JET PRINTING**

(30) Priority: 25.11.2022 IT 202200024297
(71) Applicant: Inkgenio S.r.l., 41042 Fiorano Modenese (MO) (IT)
(72) Inventor: AMIDEI, Carlo Alberto, 41100 MODENA (IT); MARASTONI, Mirko, 41049 Sassuolo (MODENA) (IT)
(74) Representative: Delbarba, Andrea

(57) **Abstract**

The present invention relates to a suspension comprising at least one pigment, a dispersing agent and a solvent. Preferably, the suspension has a volatile organic compound (VOC) content less than 3% w/w. Furthermore, the invention relates to an ink comprising the suspension and a printing process comprising at least one step of using the ink.

## Description

### FIELD OF THE INVENTION

The present invention relates to a suspension and an ink suitable for use in a printing process.

### STATE OF THE ART

Digital ink-jet printing is a printing technology which consists of projecting tiny droplets of ink, of a volume of a few picolitres, through printheads, on the medium to be printed through tiny holes, called nozzles.

With respect to traditional analogue printing, digital printing offers lower costs and high productivity, as well as contributing to a real circular economy, thanks to the reduction of overproduction, waste and storage costs.

The inks generally used in ink-jet printers consist of water, pigments and various solvents.

Industrial ink-jet printing meets industrial expectations thanks to the extremely high printing speed (up to 300 metres per minute) and a quality resolution on a printing front which can reach up to three metres in width.

This involves problems in drying the print, in particular, in the field of large-format industrial printing with high runs on flexible material, rewindable in reels. In fact, during the process, there may be problems with counter-printing and staining the transport cylinders, affecting the printing and the desired quality, in addition to the problems related to the same rewinding of the reel.

These phenomena require machine stops to thoroughly clean the parts of the printer and create significant material waste. Furthermore, since the inks are formulated with quick-drying products (such as low boiling-point alcohols and/or glycols), there is a risk that they dry inside the head, in particular in the nozzle plate, both during the printing process and in stand-by conditions, causing clogging and occlusions which lead to nozzle leaks and/or drip deviations.

In addition, the fact that the inks are formulated with products which facilitate drying involves problems related to the emissions of VOCs (Volatile Organic Compounds) into the atmosphere. It is believed that VOCs can cause damage to the applicators and to the environment in many ways. Potential hazards to the health of workers using products with high VOC dispersion indoors and for long periods of time have been reported.

Therefore, the need to have an ink which overcomes the technical disadvantages described above and which has a very low VOC content is very felt.

### SUMMARY OF THE INVENTION

A first aspect of the present invention relates to a concentrated suspension comprising at least one pigment, a dispersing agent and a solvent. Preferably, the suspension has a volatile organic compound (VOC) content of less than 3% w/w, more preferably less than 1 % w/w, said at least one pigment is present in a concentration comprised between 18 and 65% weight/weight (w/w), the dispersing agent is present in the suspension in a concentration comprised between 5 and 55% w/w, the solvent is an aqueous solvent and is present in a concentration comprised between 25 and 80% w/w.

The aqueous solvent is preferably water, more preferably distilled water. Said at least one pigment is preferably present in a concentration comprised between 20 and 60% w/w, more preferably comprised between 20 and 35% w/w.

Preferably, the dispersing agent is present in a concentration comprised between 10 and 35% w/w with respect to the weight of the suspension, preferably comprised between 15 and 25% and the solvent is preferably present in a concentration comprised between 20 and 40% w/w with respect to the weight of the suspension In a further embodiment, the solvent is present in a concentration comprised between 50 and 65% w/w with respect to the weight of the suspension.

A second aspect of the present invention relates to an ink, preferably an ink suitable for ink-jet printing, comprising the suspension described above, where the ink has a VOC content less than 1% w/w. Preferably, the suspension is present in a concentration comprised between 5 and 35% w/w with respect to the weight of the ink, preferably comprised between 8 and 30% w/w, more preferably comprised between 10 and 20% w/w.

The ink preferably comprises an aqueous solvent in a concentration comprised between 30 and 70% w/w with respect to the weight of the ink, more preferably comprised between 35 and 60% w/w.

Preferably, the ink comprises at least one binding agent in a concentration comprised between 5 and 20% w/w with respect to the weight of the ink, more preferably said at least one binding agent is at least one resin.

A third aspect of the present invention relates to a printing process for forming at least one image or writing on at least one substrate, comprising at least one step of using the ink described above.

Preferably, the printing is an ink-jet printing, more preferably a piezoelectric ink-jet printing with drop-on-demand technology. Furthermore, the printing process preferably has a printing speed comprised between 5 and 300 metres/minute, preferably comprised between 80 and 250 metres/minute.

### DEFINITIONS

In the context of the present invention, the term "volatile organic compound" or "VOC" means an organic compound having an initial boiling point equal to or less than 250°C, measured at a standard pressure of 101.3 kPa.

In the context of the present invention, "pigment particle size" means the diameter of said particles.

In the context of the present invention, "suspension" means a sub-micron concentrated pigmented dispersion.

### DETAILED DESCRIPTION OF THE INVENTION

The percentages are expressed in weight with respect to the weight of the suspension or the ink, unless otherwise specified.

A **first** aspect of the present invention relates to a suspension having a volatile organic compound (VOC) content of less than 3% by weight, preferably less than 2% weight/weight (w/w), even more preferably less than 1.5% w/w. In a preferred embodiment of the invention, the suspension has a VOC content of about 1% w/w, preferably less than 1% w/w.

In one embodiment, the suspension comprises or consists of at least one pigment, a dispersing agent and a solvent. Preferably, said at least one pigment is dispersed in the dispersing agent.

In one embodiment, the pigment particles have an average size less than about 700 nm, preferably 650 nm. Preferably, at least 95% of the pigment particles of the suspension, more preferably at least 98% have an average size less than 650 nm.

In another embodiment, the at least one pigment comprises particles with an average size less than about 350 nm, preferably less than 300 nm, even more preferably less than 200 nm. In one embodiment, the pigment particles have an average size comprised between 350 nm and 50 nm, preferably comprised between 300 and 40 nm, even more preferably comprised between 250 and 30 nm. In another embodiment, the pigment particles have an average size comprised between 100 and 700 nm and, in still other examples, the pigment particles have an average size comprised between 50 and 500 nm. Preferably, less than 5% of the pigment particles have a size less than 30 nm, preferably less than 3%, even more preferably less than 1%.

In one embodiment, the at least one pigment is present in the suspension in a concentration greater than or equal to 1% w/w with respect to the weight of the suspension. Preferably, the suspension comprises the at least one pigment in a concentration comprised between 18 and 65% w/w, preferably comprised between 20 and 60% w/w, even more preferably comprised between 20 and 35% w/w.

Preferably, the at least one pigment is chosen from cyan, magenta, yellow, white, black pigments and combinations thereof.

In one embodiment, the at least one pigment is an organic or inorganic pigment, more preferably it is an organic pigment.

Preferably, the at least one pigment is chosen from azo pigments, including diazo and monoazo pigments, polycyclic pigments (for example, phthalocyanine pigments), chelates of insoluble dyes, nitropigments, nitrous pigments and quinacridones.

Preferably, said at least one pigment is chosen from: Pigment Blue 15:4, Pigment Blue 15:3, Pigment Orange 71, Pigment Orange 34, Pigment Orange 64, Pigment Red 122, Pigment Red 254, Pigment Violet 19 and Pigment Violet 23, Pigment Red 43 and Pigment Red 202, Pigment Red 149 (Scarlet), Pigment Red 179, Pigment Red 190, Pigment and Pigment Red 254, Pigment Yellow 139, Pigment Yellow 185, Pigment Yellow 95, Pigment Yellow 93, Pigment Yellow 110, Pigment Yellow 155, Pigment Yellow 83, Pigment Yellow 138 and PBK7 Carbon black and combinations thereof.

In a preferred embodiment, the at least one pigment is chosen from: Pigment Yellow 138, a pigment comprising quinacridone, preferably Pigment Blue 15:4, Pigment Blue 15:3, Pigment Yellow 155 and PBK7 Carbon black and combinations thereof.

In one embodiment, the dispersing agent is present in the suspension in a concentration comprised between 5 and 55% w/w with respect to the weight of the suspension, preferably comprised between 10 and 30% w/w, even more preferably comprised between 15 and 25% w/w.

Preferably, said dispersing agent does not comprise VOCs and preferably does not comprise organic solvents.

In one embodiment, the dispersing agent is a polymer and/or a functionalised (co)polymer in which the functional groups are similar to the at least one pigment.

In one embodiment, the at least one dispersing agent can be added to the suspension in the form of a solution.

Preferably, the dispersing agent is chosen from: BYK 190 (*BYK Additives & Instruments*)*,* Fluijet 1732 (*Lamberti Spa*) and combinations thereof.

In one embodiment, the solvent is preferably an aqueous solvent, for example water, more preferably distilled water. That is, the solvent is not and/or does not comprise organic solvents. Preferably, the solvent is present in a concentration comprised between 25 and 80% w/w with respect to the weight of the suspension, more preferably comprised between 20 and 40% w/w.

In a further embodiment, the suspension further comprises at least one surfactant and/or an anti-foaming agent. Preferably, the suspension comprises at least one anti-foaming agent in a concentration comprised between 0.1 and 1% w/w, more preferably comprised between 0.2 and 0.7% w/w.

In a preferred embodiment, the suspension comprises or consists of at least one pigment, a dispersing agent, a solvent and an anti-foaming agent and/or a surfactant, in the concentrations and as described in detail above. Preferably, the suspension does not comprise organic solvents.

In a preferred embodiment of the invention, the suspension does not comprise humectants.

The suspension described in detail above is preferably prepared by mixing together the dispersing agent, the solvent and the anti-foaming agent and/or at least one surfactant with techniques known to the person skilled in the art. In one embodiment, after mixing the dispersing agent, the solvent and the anti-foaming agent and/or at least one surfactant, the at least one pigment is added and the components mixed together are subjected to a grinding process, in order to obtain a suspension whose particles have a size less than about 350 nm, preferably less than 300 nm, even more preferably less than 200 nm. In one embodiment, the obtained suspension is then filtered.

A **second** aspect of the present invention relates to an ink for printing comprising the suspension as described in detail above. That is, the ink is a form of the suspension described above in detail, diluted with compounds or elements known to the person skilled in the art to obtain an ink suitable for printing, preferably for ink-jet printing, more preferably for ink-jet printing with piezoelectric technology, even more preferably suitable for piezoelectric ink-jet printing with drop-on-demand technology.

Preferably, the ink has a volatile organic compound (VOC) content of less than 3% w/w, preferably less than 2% w/w, even more preferably less than 1.5% w/w. In a preferred embodiment of the invention, the ink has a VOC content of about 1% w/w, preferably less than 1% p w/w.

Preferably, the ink has a viscosity comprised between 4 and 6 centipoise (cP), more preferably comprised between 4.5 and 5.8 cP.

In one embodiment, the suspension is present in a concentration comprised between 5 and 35% w/w with respect to the weight of the ink, preferably comprised between 8 and 30% w/w, more preferably comprised between 10 and 20% w/w. Preferably, the ink comprises about 10-15% w/w of the suspension described above.

In one embodiment, the ink comprises a solvent, preferably an aqueous solvent, more preferably distilled water. Preferably, the solvent is present in a concentration comprised between 30 and 70% w/w, more preferably comprised between 35 and 60% w/w.

Preferably, the ink comprises at least one additive and/or a wetting agent and/or binder and/or cross-linker known to the person skilled in the art.

In one embodiment, the ink comprises at least one wetting agent, preferably chosen from glycerol, sorbitol, urea, polyethylene glycol (PEG) and combinations thereof. Preferably, the wetting agent is glycerol. In one embodiment, the wetting agent is present in a concentration comprised between 20 and 45% w/w with respect to the weight of the ink, more preferably comprised between 25 and 40% w/w.

In a further embodiment, the ink comprises at least one binding agent, preferably at least one resin. The resin is preferably chosen from an acrylic and/or styrenic resin.

In one embodiment, the binding agent is present in a concentration comprised between 5 and 20% w/w with respect to the weight of the ink, more preferably comprised between 8 and 15% w/w.

In another embodiment, the ink comprises at least one preservative, for example a biocide, a pH modifier, a surfactant, a fixative or penetrating agent and further additives known to the person skilled in the art for the preparation of a printing ink.

The Applicant has surprisingly developed a suspension and an ink with a very low VOC content, i.e., less than 1% by weight. The suspension and the ink of the present invention allow a better wettability of the nozzles and parts of the printhead, avoiding clogging and occlusions which lead to nozzle leaks and/or drip deviations, increasing the life of the printheads and printer components, with a consequent reduction in maintenance costs.

Furthermore, the use of the suspension and of the ink described herein allows an excellent drying of the ink on the printing medium, without counter-printing problems arising, the elimination of problems in drying the printhead, in particular in the nozzle plate both during the printing process and in stand-by conditions.

The advantages given by the use of the suspension and of the ink described are numerous, including for example the possibility of high runs of single-pass ink-jet printing on flexible material which can be rewound in reels, lower costs and high productivity, convenient on-demand and just-in-time works, printing tests and rapid cycle prototypes, as well as personalised campaigns.

A **third** aspect of the present invention relates to a printing process. Said printing process comprises at least one step of using the ink described in detail above for forming at least one image or writing on at least one substrate.

In one embodiment, the process comprises projecting a flow of drops of the ink composition onto at least one surface of the substrate to form the desired printed image or writing. The ink is fixed on the substrate of the medium by means of any printing technique, digital or analogue, preferably digital printing. Preferably, the process is a digital printing process. Non-limiting examples of such ink-jet printing techniques are thermal, acoustic and piezoelectric ink-jet printing. In one embodiment, such an ink-jet printing technique is a piezoelectric ink-jet printing technique. Preferably, the ink is used in piezoelectric ink-jet printers. That is, the process includes the use of digital ink-jet printers with piezoelectric printheads.

Preferably, the process includes the use of a single-pass digital printer, i.e., a printer comprising a plurality of printheads. Said single-pass printer preferably comprises a plurality of printheads arranged to form an angle comprised between 30 and 150° with the printing substrate, preferably an angle of about 90°.

In one embodiment, the printing process is a printing process with a printing speed comprised between 5 and 300 metres/minute, preferably comprised between 80 and 250 metres/minute.

Preferably, the at least one substrate is a substrate known to the person skilled in the art for printing, preferably for digital printing. Preferably said substrate is a flexible substrate, preferably a substrate which can be wound in a reel, or is a rigid substrate, more preferably in the form of a sheet. In one embodiment, said substrate is chosen from paper, cardboard, cellulose.

### EXAMPLE

The following methods and tools have been used to determine the properties indicated in the present application.
Particle size: Mastersizer 3000 (Malvern) (5% laser darkening, mixer 2,000 rpm; analysis with Mie diffusion model).
Viscosity: Kinexus Series rheometer (Malvern) with flat cone geometry (25°C, 100 s-1).
Dynamic surface tension: Tensiometer: Sita proline t15 (SITA) (bubble time 0.5-15 s).
Conductivity: Model COND51 conductivity meter (XS Instruments)
pH value: 8 Series pHmeter (XS Instruments)

### Example 1

In a rotating blade mixer, the components (ii), (iii) and (iv) shown in Table 1 were mixed. Subsequently, the component (i) was added and the suspension was transferred to a horizontal mill, loaded with yttrium-stabilized zirconium dioxide spheres, having dimensions 0.35-0.45 mm. The grinding process, carried out at ambient pressure and without providing thermal energy to the system, was prolonged until obtaining a suspension in which the particle size (d(100)) is less than 200 nm. At the end of the grinding, the suspension was filtered on a 0.6 µm filter.

The suspension (S01) was diluted with suitable solvents(v) to obtain the ink 1, suitable for printing on uncoated book paper in general, for SAMBA 3GL FUJIFILM printheads for single-pass ink-jet printing. The composition of the ink is shown in table 2.

**Table 1**

| | | Description | % by weight |
|---|---|---|---|
| (i) | pigment | Pigment PBK 7 | 30 |
| (ii) | dispersing agent | Disperbyk 190 | 30(a) |
| (iii) | solvent | distilled water | 39.5 |
| (iv) | anti-foaming agent | BYK-1640 (BYK Additives) | 0.5 |

| | | | |
|---|---|---|---|
| (a) the product has a dispersing agent content of 40% by weight. | | | |

**Table 2**

| Ink 1 - for printing on paper | | |
|---|---|---|
| | | % by weight |
| Suspension | S01 | 12.0 |
| Resin | 2019NK004-1 binder (Basf) | 10 |
| solvent | distilled water | 42.0 |
| | glycerol | 33.5 |
| Biocide | ACTICIDE BHD 1 | 0.23 |
| pH modifier | triethanolamine | 1.5 |
| Surfactant | Surfynol 104z (Evonik) | 0.77 |
| | | |

The inks are characterised by the following properties:
Ink 1 - for printing on paper
Viscosity [25°C, 100 s-1] 5.3 cP
Surface tension [1.2 s] 35.0 mN/m
Conductivity 450 µS/cm
pH 8.2
VOC content: ≤1% determined by the UNI EN ISO 11890-2 2020 method.

## Claims

1. A suspension comprising at least one pigment, a dispersing agent and a solvent,
wherein said at least one pigment is present in a concentration comprised between 18 and 65% weight/weight (w/w) with respect to the weight of the suspension,
wherein the dispersing agent is present in the suspension in a concentration comprised between 5 and 55% w/w,
wherein the solvent is an aqueous solvent and is present in a concentration comprised between 25 and 80% w/w and
wherein the suspension has a volatile organic compound (VOC) content of less than 3% w/w.

2. The suspension according to claim 1, wherein the VOC content is less than 1% w/w with respect to the weight of the suspension.

3. The suspension according to claim 1 or 2, wherein the aqueous solvent is water, preferably distilled water.

4. The suspension according to any one of claims 1-3, wherein said at least one pigment is present in a concentration comprised between 20 and 60% w/w with respect to the weight of the suspension.

5. The suspension according to any one of claims 1-4, wherein said at least one pigment is present in a concentration comprised between 20 and 35% w/w.

6. The suspension according to any one of claims 1-5, wherein the dispersing agent is present in a concentration comprised between 10 and 35% w/w with respect to the weight of the suspension, preferably comprised between 15 and 25% w/w.

7. The suspension according to any one of claims 1-6, wherein the solvent is present in a concentration comprised between 20 and 40% w/w with respect to the weight of the suspension.

8. The suspension according to any one of claims 1-6, wherein the solvent is present in a concentration comprised between 50 and 65% w/w with respect to the weight of the suspension.

9. An ink comprising the suspension according to any one of claims 1-8, wherein the ink has a VOC content less than 1% w/w.

10. The ink according to claim 9, wherein the suspension is present in a concentration comprised between 5 and 35% w/w with respect to the weight of the ink, preferably comprised between 8 and 30% w/w, more preferably comprised between 10 and 20% w/w.

11. The ink according to claim 9 or 10, comprising an aqueous solvent in a concentration comprised between 30 and 55% w/w with respect to the weight of the ink, more preferably comprised between 35 and 50% w/w.

12. The ink according to any one of claims 9-11, comprising at least one binding agent in a concentration comprised between 5 and 20% w/w with respect to the weight of the ink, preferably said at least one binding agent is at least one resin.

13. A printing process for forming at least one image or writing on at least one substrate, comprising at least one step of using an ink according to any one of claims 9-12.

14. The process according to claim 13, wherein the printing is a piezoelectric ink-jet printing with drop-on-demand technology.

15. The process according to claim 13 or 14, wherein the printing process has a printing speed comprised between 5 and 300 metres/minute, preferably comprised between 80 and 250 metres/minute.
